**Europäisches Patentamt**

**European Patent Office**

**Office européen des brevets**

(11) Veröffentlichungsnummer: **0 293 582 B1**

# EUROPÄISCHE PATENTSCHRIFT

(45) Veröffentlichungstag der Patentschrift: **01.07.92**

(51) Int. Cl.⁵: **B23C 3/30**

(21) Anmeldenummer: **88106084.2**

(22) Anmeldetag: **16.04.88**

---

(54) Schlagmesser-Fräsmaschine.

---

(30) Priorität: **30.05.87 DE 3718262**

(43) Veröffentlichungstag der Anmeldung:
**07.12.88 Patentblatt 88/49**

(45) Bekanntmachung des Hinweises auf die
Patenterteilung:
**01.07.92 Patentblatt 92/27**

(84) Benannte Vertragsstaaten:
**CH DE ES FR GB IT LI SE**

(56) Entgegenhaltungen:
**DE-C- 911 689**
**FR-A- 2 369 896**
**GB-A- 2 177 036**

(73) Patentinhaber: **Wera-Werk Hermann Werner GmbH & Co.**
**Korzerter Strasse 21**
**W-5600 Wuppertal 12(DE)**

(72) Erfinder: **Lieser, Karl**
**Dornröschenweg 12**
**W-5600 Wuppertal 1(DE)**

(74) Vertreter: **Rieder, Hans-Joachim, Dr. et al**
**Corneliusstrasse 45 Postfach 11 04 51**
**W-5600 Wuppertal 11(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schlagmesser-Fräsmaschine gemäß Oberbegriff des Patentanspruchs 1.

Aus der DE-PS 1 921 514 ist eine solche Schlagmesser-Fräsmaschine bekannt. Die Werkzeug-Trägerachse und die Werkstück-Drehachse stehen rechtwinklig und windschief zueinander. Bedingt durch ein entsprechendes Übersetzungsverhältnis lassen sich am Werkstück in gleicher Umfangsverteilung vorgesehene Nuten mit hoher Schnittgeschwindigkeit einarbeiten. Kühlmittel ist hierzu nicht erforderlich, bedingt durch die sich freischneidende Werkzeugschneide. Die auf diese Weise erzeugten Nuten sind zwar in ihrer geometrischen Querschnittsform dem Schlagmesser-Schneidenprofil ähnlich, jedoch sind sie durch das Freischneiden etwas vergrößert. Da die Querschnittsform der Nuten vom Schlagmesser-Schneidenprofil, dem Flugkreis des Schlagmessers, dem Werkstück-Durchmesser, der Teilung und der Schnittiefe abhängig ist, muß bereits bei Änderung eines dieser Parameter eine anders profilierte Schlagmesserschneide gewählt werden.

Damit mittels eines einzigen Schlagmessers trotz Änderung der das Nutenprofil bestimmenden Parameter der Werkzeugschneide genau angepaßte Nuten am Werkstück hergestellt werden können, ist es aus der DE-PS 26 50 955 bekannt, den Werkzeug-Träger um eine Achse schwenkbar und feststellbar anzuordnen, welche Achse die Drehachse des Werkstückes und die Werkzeug-Trägerachse rechtwinklig schneidet. Die Formgleichheit zwischen Nutenprofil und Werkzeugschneide verlangt komplizierte, hinterschnittene Schlagmesser. Auch ist der Werkzeugträger in seiner Winkelstellung gemäß dem verlangten Nutenprofil zu fixieren.

Die der Erfindung zugrundeliegende Aufgabe besteht darin, eine Schlagmesser-Fräsmaschine der angegebenen Art in herstellungstechnisch einfacher Weise so auszugestalten, daß ein der Werkzeugschneide genau angepaßtes Nutenprofil am Werkstück erzeugbar ist, und zwar ohne jegliche Winkelverstellung des Werkzeugträgers zur Drehachse des Werkstückes.

Die der Erfindung zugrundeliegende Aufgabe ist in Verbindung mit der Maschine nach dem Oberbegriff durch die im Kennzeichen des Patentanspruches angegebenen Merkmale gelöst. Der Unteranspruch stellt eine vorteilhafte Lösung dazu dar.

Zufolge der erfindungsgemäßen Ausgestaltung ist eine gattungsgemäße Schlagmesser-Fräsmaschine geschaffen, mittels welcher trotz Änderung der das Nutenprofil bestimmenden Parameter der Werkzeugschneide genau angepaßte Nuten am Werkstück hergestellt werden können. Die Schlagmesser-Fräsmaschine eignet sich insbesondere zur Fertigung von Zahnwellenprofilen, Kerbzahnverzahnungen, Hirthverzahnungen, Keilwellenprofilen und Sonderprofilen. Solange das Schlagmesser noch nicht seine maximale Eintrittstiefe erreicht hat, findet das Freischneiden statt. Im Augenblick der maximalen Eintrittstiefe wird die Drehbewegung des Werkstükkes jedoch kurzzeitig unterbrochen, während das Schlagmesser weiterläuft und dabei das seinem Schneidenprofil genau formangepaßte Nutenprofil erzeugt. Das kurzzeitige Unterbrechen der Drehbewegung des Werkstückes durch die Stopposition beeinträchtigt dabei nicht das Drehzahlverhältnis zwischen Werkstück und Schlagmesser. Sobald das Schlagmesser die größte Eintrittstiefe verläßt, setzt die Drehbewegung des Werkstückes ein. Eine Verfälschung des Nutenprofils trotz des weiteren Freischneidens tritt dann jedoch nicht ein. Die größte Eintrittstiefe des Schlagmessers liegt vor, wenn es sich in der 90°-Eingriffsposition der Nut befindet. Diese Formgleichheit zwischen dem Nutenprofil und der Werkzeugschneide erhält man dabei, ohne die komplizierten, hinterschliffenen Schlagmesser einsetzen zu müssen, die sonst erforderlich wären. Das Nachschleifen der Schlagmesser ist sodann vereinfacht. Auch kann mit höheren Standzeiten der Werkzeugschneide gerechnet werden.

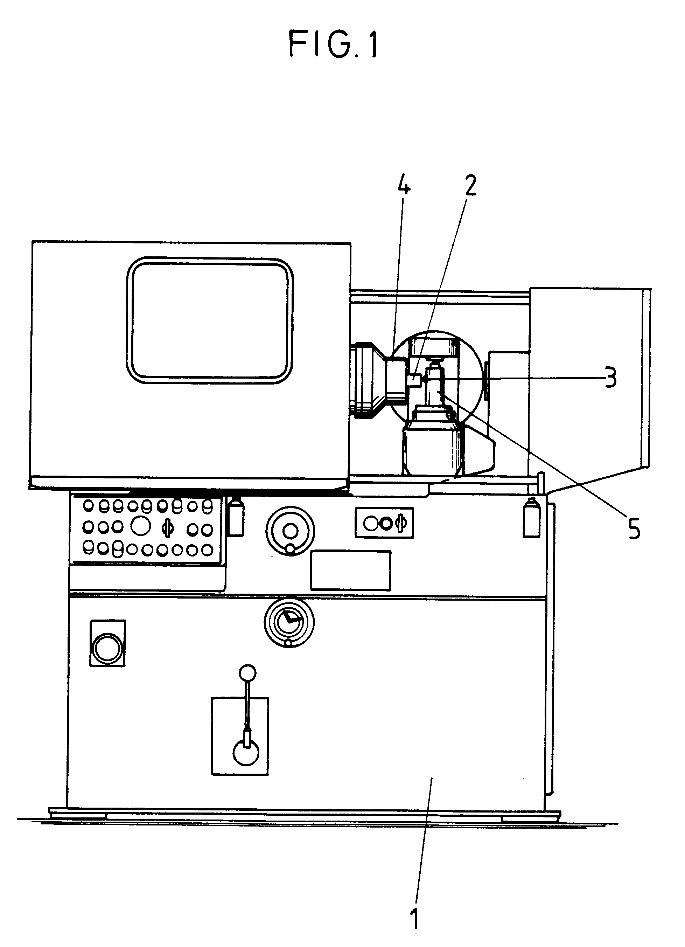

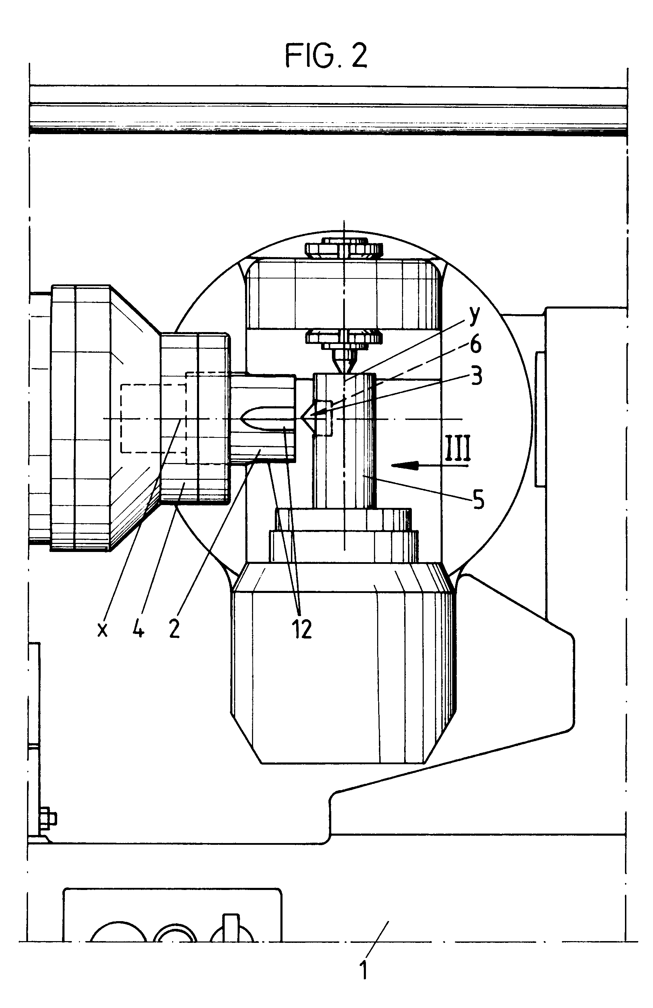

Nachstehend wird ein Ausführungsbeispiel der Erfindung anhand der Fig. 1 bis 4 erläutert. Es zeigt

Fig. 1    eine Ansicht einer erfindungsgemäß ausgestalteten Schlagmesser-Fräsmaschine,

Fig. 2    in vergrößerter Ausschnittsdarstellung eine Ansicht im Bereich des Werkzeugträgers und des das Werkstück haltenden Spannfutters,

Fig. 3    eine Detailansicht auf das Werkstück und Fräserwelle, in Pfeilrichtung III der Fig. 2 gesehen und

Fig. 4    den Schnitt nach der Linie IV-IV, wobei das Schlagmesser sich in der mit vollen Linien gezeichneten maximalen Eintrittstiefe befindet und wobei die Drehbewegung des Werkstückes durch eine Stopposition kurzzeitig unterbrochen ist.

Die Schlagmesser-Fräsmaschine besitzt ein Fußgestell 1, in welchem ein nicht dargestellter Antrieb untergebracht ist. Durch diesen werden ein Werkstück 2 und ein Schlagmesser 3 in aufeinander abgestimmte Drehzahlen gebracht.

Zur Aufnahme des Werkstückes 2 dient ein um eine horizontale Drehachse x antreibbares Spannfutter 4. Der Antrieb des Spannfutters 4 und damit des Werkstückes 2 ist so gewählt, daß die Drehbewegung durch eine Stopposition kurzzeitig unterbrechbar ist, um -ausgehend von dieser Stoppositionunmittelbar wieder angetrieben zu werden.

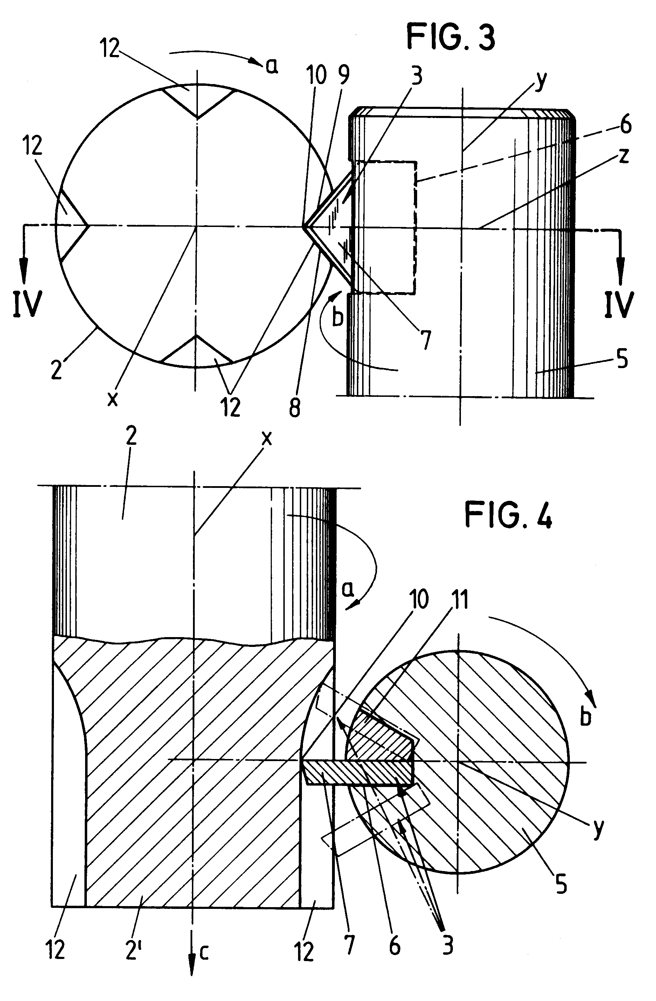

Das Schlagmesser 3 ist einer vertikal ausgerichteten Fräserwelle 5 zugeordnet. Diese enthält einen Einsteckschacht 6 für das Schlagmesser 3. Letzteres besitzt eine dreieckförmige Werkzeugschneide 7, deren Schneidflanken 8, 9 hinterschnitten sind und in einer Spitze 10 zusammenlaufen derart, daß diese Spitze 10 radial zur Werkzeug-Trägerachse y ausgerichtet ist. Zur Halterung des Schlagmessers 3 in der eingesetzten Lage dient eine Druckbacke 11, die das Schlagmesser 3 schwingungsfrei einspannt. Zur Erzeugung von in den Fig. 3 und 4 veranschaulichten Nuten 12 werden das Werkstück 2 und das Schlagmesser 3 in eine solche Position zueinander gebracht, daß die durch die Spitze 10 der Werkzeugschneide gehende Flugbahn z radial steht zum im Querschnitt zylindrisch gestalteten Werkstück 2, in welches beim Ausführungsbeispiel 4 in gleicher Winkelverteilung angeordnete Nuten 12 einzuarbeiten sind.

Das intermittierend angetriebene Spannfutter 4 läuft, von der Frontseite des Werkstückes 2 her gesehen, in Uhrzeigerrichtung a um, während die Fräserwelle 5 in Pfeilrichtung b umläuft, wobei das an einem nicht dargestellten Schlitten angeordnete Spannfutter 4 zufolge der Schlittenführung eine überlagerte Längsbewegung in Pfeilrichtung c ausführen kann.

Sollen die vier in gleicher Umfangsverteilung angeordneten Nuten 12 erzeugt werden, so ist das Werkstück 2 in die vorgenannte entsprechende Höhenposition zur Flugbahn z des Schlagmessers 3 zu bringen derart, daß das Schlagmesser vom freien Ende $2'$ in das Werkstück 2 eintauchen kann. Die Tiefe der Nuten 12 ist bestimmt durch die Abstandseinstellung zwischen Werkzeug-Trägerachse y und Werkstück-Drehachse x. Sobald beim Fräsen der Nuten 12 das kontinuierlich umlaufende Schlagmesser 3 sich in der größten Eintrittstiefe in der Nut 12 befindet, wird die Drehbewegung des Werkstückes 2 durch eine Stopposition kurzzeitig unterbrochen. In diesem Moment erfolgt durch das Weiterlaufen des Schlagmessers 3 ein Formfräsen, bis die Drehbewegung des Werkstückes schlagartig beschleunigt wieder einsetzt. Bis zum Erreichen der maximalen Eintrittstiefe findet demzufolge innerhalb des zu erzeugenden Nutenprofiles durch die Schneidkanten 8, 9 der Schälvorgang statt. Auch nach dem kurzzeitigen Stillsetzen der Drehbewegung des Werkstückes 2 und dem anschließenden Beschleunigen wird durch die noch innerhalb des Werkstückes befindliche Werkzeugschneide nur so viel Material abgetragen, daß dadurch keine Verfälschung des Nutenprofiles in bezug auf die Form der Werkzeugschneide auftritt. Nachdem die Werkzeugschneide bzw. das Schlagmesser die soeben durchlaufene Nut 12 verlassen hat, taucht es beim nächsten Schneidvorgang in die dann in entsprechende Position gebrachte benachbarte Nut 12 ein.

Die maximale Eintrittstiefe des Schlagmessers 3 geht insbesondere aus Fig. 4 hervor. Dann steht die durch die Spitze 10 der Werkzeugschneide 7 gehende Radiale senkrecht zur Nut 12 bzw. zur Werkstück-Drehachse x.

Ein wirtschaftliches Fertigen der Nuten 12 ist dadurch verwirklicht, daß neben kurzfristigen Verzögerungen bis zum Stillstand hohe Beschleunigungen erzeugbar sind. Für ein wirtschaftliches Arbeiten spricht ferner noch die Tatsache, daß entsprechende Einstellarbeiten zwecks Erzielung einer Neigungsverstellung der Werkzeug-Trägerachse y nicht mehr erforderlich sind. Auch können einfach zu schleifende Schlagmesser eingesetzt werden.

Weitere Variationen bezüglich der zu erzeugenden Profile sind dadurch möglich, die Ausrichtung von Werkzeugwelle zur Werkzeugspindel anders als 90° zu wählen bzw. einstellbar zu machen.

Weiterhin läßt sich eine Weiterbildung dadurch erreichen, daß erfindungsgemäß die Drehgeschwindigkeit des Schlagmessers 10 über den eingetauchten Weg unterschiedlich ist zu derjenigen über den ausgetauchten Weg.

**Patentansprüche**

1. Schlagmesser-Fräsmaschine zum gleichzeitigen Einfräsen mehrerer Nuten (12) in umlaufende Werkstücke (2) mittels eines an einem umlaufenden Werkzeugträger radial auswärts vorstehenden Schlagmessers (3), wobei die Umlaufdrehzahlen von Werkzeugträger und Werkstück in einem von der Nutenzahl des Werkstückes bestimmten Verhältnis stehen, dadurch gekennzeichnet, daß die Drehbewegung des Werkstückes (2) im Augenblick der maximalen Eintrittstiefe des Schlagmessers (3) kurzzeitig durch eine Phase verminderter Geschwindigkeit erfolgt.

2. Schlagmesser-Fräsmaschine nach Anspruch 1, dadurch gekennzeichnet, daß die Phase verminderter Geschwindigkeit als Stopposition gestaltet ist.

3. Schlagmesser-Fräsmaschine nach Anspruch 1, dadurch gekennzeichnet, daß die Drehgeschwindigkeit des Schlagmessers (10) über den ausgetauchten Weg unterschiedlich ist zu derjenigen über den eingetauchten Weg.

**Claims**

1. Fly-cutter milling machine for simultaneously cutting several grooves (12) in rotating workpieces (2) by means of a fly cutter (3) projecting radially outwards on a rotating tool support, wherein the speeds of rotation of tool support and workpiece are in a ratio determined by the number of grooves of the workpiece, characterised in that the rotary movement of the workpiece (2) at the moment of the maximum depth of entry of the fly cutter (3) takes place for a short time through a stage of reduced speed.

2. Fly-cutter milling machine according to claim 1, characterised in that the stage of reduced speed is designed as a stop position.

3. Fly-cutter milling machine according to claim 1, characterised in that the speed of rotation of the fly cutter (10) over the path after emergence is different to that over the path while submerged.

**Revendications**

1. Fraiseuse à couteau frappeur pour le fraisage simultané d'une pluralité de rainures (12) sur une pièce en rotation à usiner (2), au moyen d'un couteau frappeur (3) disposé en saillie radialement vers l'extérieur sur un porte-outil en rotation, le rapport des vitesses de rotation du porte-outil et de la pièce à usiner étant fixe et dépendant du nombre de rainures de la pièce à usiner, caractérisée en ce que le mouvement de rotation de la pièce à usiner (2) passe temporairement par une phase à vitesse réduite au moment de la pénétration à profondeur maximale du couteau frappeur (3).

2. Fraiseuse à couteau frappeur selon la revendication 1, caractérisée en ce que la phase à vitesse réduite est constituée d'une position d'arrêt.

3. Fraiseuse à couteau frappeur selon la revendication 1, caractérisée en ce que la vitesse de rotation du couteau frappeur (10) est différente sur le chemin d'enfoncement dans la pièce, de celle sur le chemin de sortie hors de la pièce.

# FIG.1

# FIG. 2

FIG. 3

FIG. 4